# EUROPEAN PATENT SPECIFICATION

(11) **EP 4 637 058 B1**
(45) Date of publication and mention of the grant of the patent: **07.10.2026**
(21) Application number: 25169678.7
(22) Date of filing: 10.04.2025
(51) Int. Cl.: H04H 20/42

(54) **METHODS OF CONTROLLING TRANSMITTERS**
VERFAHREN ZUR STEUERUNG VON SENDERN
PROCÉDÉS DE COMMANDE D'ÉMETTEURS

(30) Priority: 16.04.2024 KR 20240050471
(43) Date of publication of application: 22.10.2025
(73) Proprietor: HYUNDAI MOBIS CO., LTD., Seoul 06141 (KR)
(72) Inventor: LEE, Yong Joon, 16891 Yongin-si, Gyeonggi-do (KR)
(74) Representative: Jung, Minkyu

(56) References cited:
- EP-A2- 1 065 815
- US-A1- 2010 285 732
- US-A1- 2013 094 426

## Description

### BACKGROUND OF THE DISCLOSURE

### TECHNICALFIELD

The present disclosure is applicable to all types of devices and methods for providing data broadcasting. For example, it is applicable to vehicles using radio data system (RDS)/RDS2 data, but is not limited thereto.

### BACKGROUND

A radio data system (RDS) refers to the technology of transmitting RDS auxiliary data for data broadcasting in the analog broadcast FM spectrum to allow for displaying auxiliary data such as the radio broadcaster's name (e.g., KBS, SBS, MBC), song titles, and lyrics.

However, the RDS has a limitation in the amount of data it can transmit. To overcome this limitation, RDS2 has been proposed. RDS2 allows additional subcarriers added to a higher layer to be used repetitively up to three times in the FM multiplex system on both sidebands surrounding the 57 kHz subcarrier used by the RDS. Therefore, a C-Type group with an auxiliary data stream that increases the data capacity can be used. The additional subcarriers that may be used are 66.5 kHz, 71.25 kHz, and 76 kHz.

The data transmission system of RDS2 has been improved to expand the RDS data stream and ensure backward compatibility. However, once a single frequency is determined in the same area, the data broadcast transmits only the same data within the same coverage, and thus has a limitation in scalability.

In other words, according to conventional technology, in a single frequency network (SFN) environment, when different RDS auxiliary data are transmitted at the same frequency, the receiver may fail to properly receive the RDS auxiliary data due to conflicts.

US 2010/285732 A1 describes a method for broadcasting via radio transmission comprising: broadcasting data on a first radio frequency; transmitting an indication of a second frequency via said broadcast on said first frequency; establishing a synchronous second broadcast of said data on said second frequency; and discontinuing transmission of said broadcast on said first frequency.

EP 1 065 815 A2 discloses a Radio Broadcast Data System protocol capable of handling framed data thus enabling transmissions of larger amounts of related information to the receiver units.

US 2013/094426 A1 describes radio broadcasting equipment that enables targeted radio broadcast delivery in a radio broadcast area. The equipment includes a plurality of auxiliary transmitters associated with at least one main transmitter, the at least one main transmitter transmitting broadcast area wide programming for a respective broadcast area; and a mechanism for switching on transmission of localized RDS data by at least one of the plurality of auxiliary transmitters, wherein the at least one of the plurality of auxiliary transmitters transmits localized RDS data on at least one of the transmission frequencies of the at least one main transmitter

### SUMMARY

An embodiment of the present disclosure is directed to efficiently transmitting data to be broadcast in the same area using RDS/RDS2.

Another embodiment of the present disclosure is directed to resolving the conventional conflict issue by allowing multiple transmitters to transmit different RDS/RDS2 auxiliary data.

Additional advantages, objects, and features of the disclosure will be set forth in part in the description which follows and in part will become apparent to those having ordinary skill in the art upon examination of the following or may be learned from practice of the disclosure. The objectives and other advantages of the disclosure may be realized and attained by the structure particularly pointed out in the written description and claims hereof as well as the appended drawings. According to the present invention, a method for controlling a transmitter is set forth in the independent claims.

In one aspect of the present disclosure, a method for controlling a transmitter may include transmitting FM radio broadcast to a receiver, transmitting auxiliary data of a radio data system to the receiver and another transmitter at a first frequency, receiving auxiliary data of the radio data system at a second frequency from the other transmitter, and stopping the transmission of the auxiliary data of the radio data system at the first frequency based on that the auxiliary data of the radio data system at the second frequency corresponds to the auxiliary data of the radio data system at the first frequency.

For example, the stopping may include comparing the auxiliary data of the radio data system at the second frequency with the auxiliary data of the radio data system at the first frequency.

For example, the stopping may be performed only when the auxiliary data of the radio data system at the second frequency is the same as the auxiliary data of the radio data system at the first frequency as a result of the comparison.

According to the present invention, the first frequency corresponds to 57 kHz, and the second frequency corresponds to any one of 66.5 kHz, 71.25 kHz, or 76.0 kHz.

In another aspect of the present disclosure, a method for controlling a transmitter may include receiving auxiliary data of a radio data system at a first frequency from another transmitter, generating additional auxiliary data different from the auxiliary data of the radio data system at the first frequency, and transmitting the generated auxiliary data and the received auxiliary data of the radio data system to the other transmitter and a receiver at a second frequency.

For example, the other transmitter may transmit FM radio broadcast to the receiver.

For example, the receiver may correspond to a vehicle.

According to one embodiment of the present disclosure, when there are multiple transmitters intending to transmit auxiliary data of a radio data system, auxiliary data may be added/deleted simply based on the reception status of the auxiliary data.

According to one embodiment of the present disclosure, the functionality of RDS2 auxiliary data broadcasting may be expanded.

Moreover, according to one embodiment of the present disclosure, when there are multiple transmitters intending to transmit auxiliary data of the radio data system, the efficiency of auxiliary data transmission may be improved using RDS/RDS2.

### BRIEF DESCRIPTION OF THE DRAWINGS

The accompanying drawings, which are included to provide a further understanding of the disclosure and are incorporated in and constitute a part of this application, illustrate embodiment(s) of the present disclosure and together with the description serve to explain the principle of the present disclosure. For a better understanding of the various embodiments described below, the following description of the embodiments should be read in conjunction with the accompanying drawings, which include corresponding parts with like reference numbers throughout the drawings. In the drawings:
FIG. 1 illustrates a transmission spectrum of FM broadcasting;
FIG. 2 specifically illustrates the transmission spectrum of RDS/RDS2 broadcasting;
FIG. 3 illustrates a case where a conflict of RDS auxiliary data occurs when there are multiple transmitters;
FIG. 4 schematically illustrates an overall system to address the issue in FIG. 3;
FIG. 5 is a conceptual diagram of multiplexing FM broadcasting and RDS/RDS2 auxiliary data;
FIG. 6 is a block diagram of a first transmitter according to one embodiment of the present disclosure;
FIG. 7 is a block diagram of a second transmitter according to one embodiment of the present disclosure;
FIG. 8 illustrates the reception status of RDS/RDS2 auxiliary data on a receiver according to one embodiment of the present disclosure; and
FIG. 9 is a flowchart illustrating the operation process of the first transmitter and the second transmitter according to one embodiment of the present disclosure.

### DETAILED DESCRIPTION

Preferred embodiments of the embodiments will be described in detail, examples of which are shown in the accompanying drawings. The following detailed description with reference to the accompanying drawings is intended to illustrate preferred embodiments of the embodiments rather than to present only embodiments that can be implemented in accordance with the embodiments. The following detailed description includes details to provide a thorough understanding of the embodiments. However, it will be apparent to those skilled in the art that embodiments can be practiced without these details.

Most terms used in the embodiments have been selected from general ones widely used in the art, but some terms have been arbitrarily selected by the applicant and their meanings are explained in detail in the following description as needed. Thus, the embodiments should be understood based upon the intended meanings of the terms rather than their simple names or meanings.

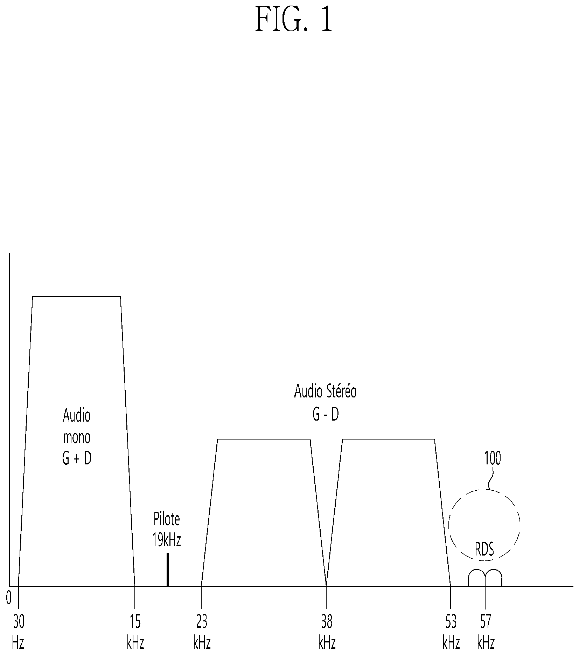

FIG. 1 illustrates a transmission spectrum of FM broadcasting.

FM broadcasting has a wider bandwidth than AM broadcasting, making it suitable for stereo broadcasting. To briefly explain the principle of FM stereo broadcasting, an L+R signal, which is the sum of a left (L) channel and a right (R) channel, the difference signal (L-R) of both channels, also known as the subcarrier, and a 19 kHz pilot signal are transmitted on a single radio wave.

Here, the L+R sum signal is called the main channel, and the L-R difference signal is called the subchannel.

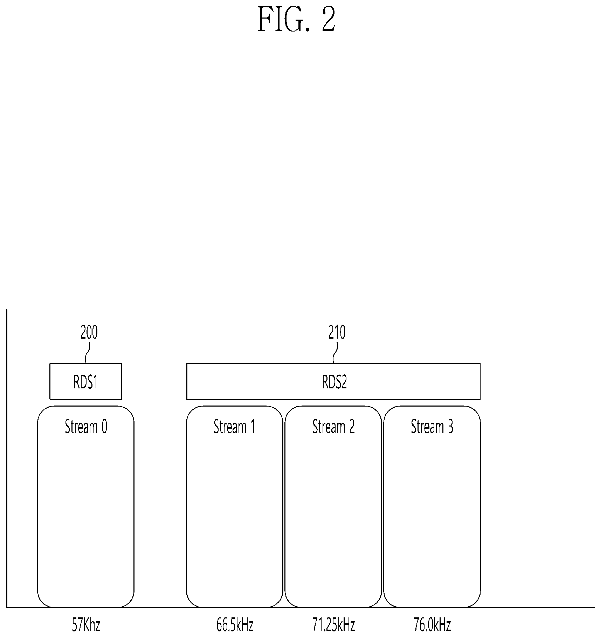

RDS 100, is a technology for transmitting digital information on the FM broadcast signal, using a subcarrier frequency of 57 kHz (+-6 Hz), which corresponds to the third harmonic wave of the stereophonic 19 kHz pilot tone. The modulation method is, for example, 2PSK, and the data rate is 1187.5 bps (120 bytes). The frequencies for RDS/RDS2 will be described in more detail below with reference to FIG. 2.

FIG. 2 specifically illustrates the transmission spectrum of RDS/RDS2 broadcasting.

As shown in FIG. 2, RDS 200 defines the data transmission/reception frequency as 57 kHz, while RDS2 210 additionally defines three frequencies (66.5 kHz, 71.25 kHz, and 76.0 kHz) as frequencies for data transmission/reception.

Transmitting the same data simultaneously on stream 0, stream 1, stream 2, and stream 3 shown in FIG. 2 reduces data transmission efficiency. Therefore, it may be preferable to transmit different data whenever possible.

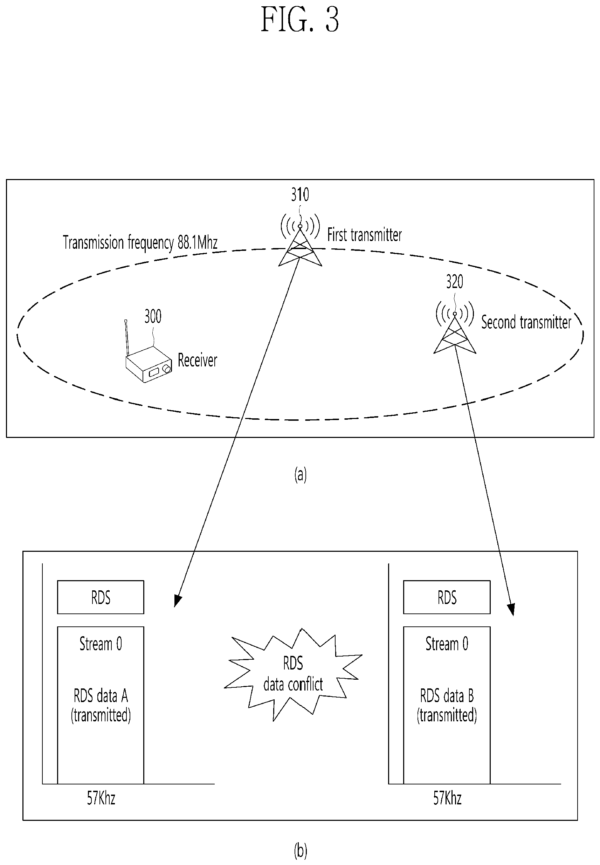

FIG. 3 illustrates a case where a conflict of RDS auxiliary data occurs when there are multiple transmitters.

As shown in FIG. 3-(a), when a first transmitter 310 transmits data broadcast using FM RDS, the receiver 300 receives the stream of the RDS data in the broadcast.

In this operation, as shown in FIG. 3-(b), the first transmitter 310 transmits RDS data broadcast using stream 0.

However, as shown in FIG. 3-(b), if the second transmitter 320 attempts to transmit RDS data at the same frequency, it cannot perform transmission (nor reception) due to data conflict.

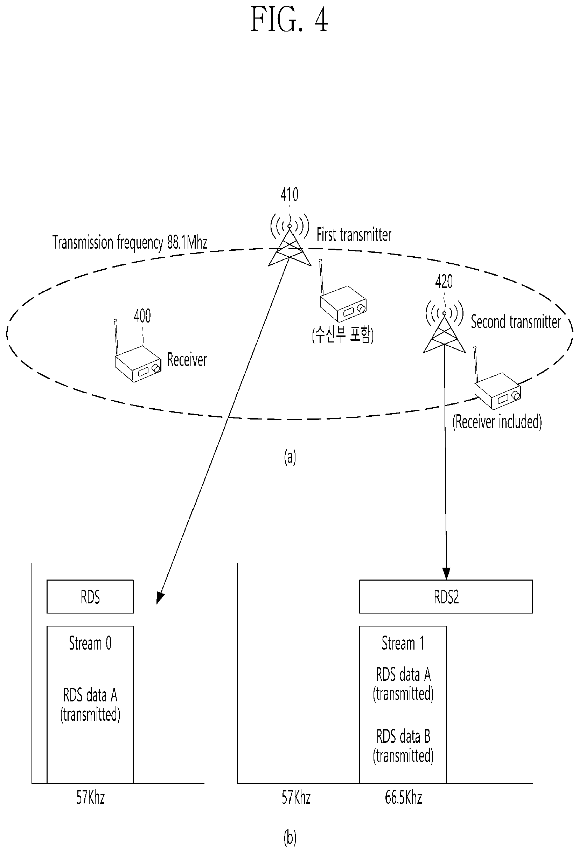

To address this issue, it is necessary to additionally include a receiver in each transmitter. A related embodiment will be described in more detail with reference to FIG. 4.

FIG. 4 schematically illustrates an overall system to address the issue in FIG. 3.

As shown in FIG. 4-(a), when data broadcast is transmitted using FM RDS, the receiver 400 receives the stream of RDS data from the broadcast.

In this operation, the first transmitter 410 transmits the RDS data broadcast using stream 0 as shown in FIG. 4-(b).

Then, a second transmitter 420 synthesizes data A received from the first transmitter 410 and data B and transmits the same using stream 1 (refer to FIG. 4-(b)).

Accordingly, the receiver (400) normally receives both RDS auxiliary data A and RDS auxiliary data B.

Furthermore, when the first transmitter 410 receives stream 1 from the second transmitter 420, the first transmitter 410 stops transmitting stream 0.

Additionally, while the first transmitter 410 is designed to transmit FM broadcast and RDS auxiliary data, while the second transmitter 420 is designed to transmit only RDS auxiliary data to ensure that existing FM radio reception is not affected.

To implement this design, as shown in FIG. 4-(a), the first transmitter 410 has an additional receiver and needs to be configured to compare its data with the RDS auxiliary data received from the second transmitter 420.

The second transmitter 420 also has an additional receiver and needs to be configured to compare its data with the RDS auxiliary data received from the first transmitter 410.

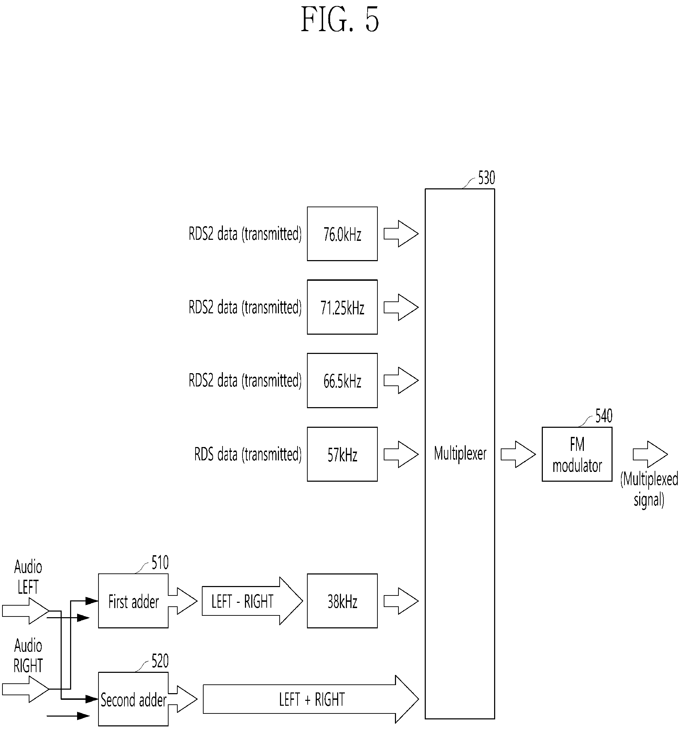

FIG. 5 is a conceptual diagram of multiplexing FM broadcasting and RDS/RDS2 auxiliary data.

The FM stereo broadcast system multiplexes and combines a mono signal and a stereo signal and transmits the combined signal.

Two audio sources (Left/Right) are first passed through a high-pass filter (HPF), pre-emphasized, and then input into the second adder 520 to generate the sum of the two signals or the L+R signal (mono signal). The other adder, the first adder 510, outputs the difference of the two signals or the L-R signal (stereo signal).

The FM stereo L+R signal and L-R signal are applied to a balanced modulator using a subcarrier of 38 kHz, which is twice the 19 kHz frequency.

Furthermore, the multiplexer 530 multiplexes the mono signal L+R, the stereo signal (L-R), the RDS data (57 kHz), and the RDS2 data (66.5, 71.25, and 76.0 kHz) into one signal, and the FM modulator 540 transmits the same by varying the radio carrier frequency of constant amplitude according to the electric signal.

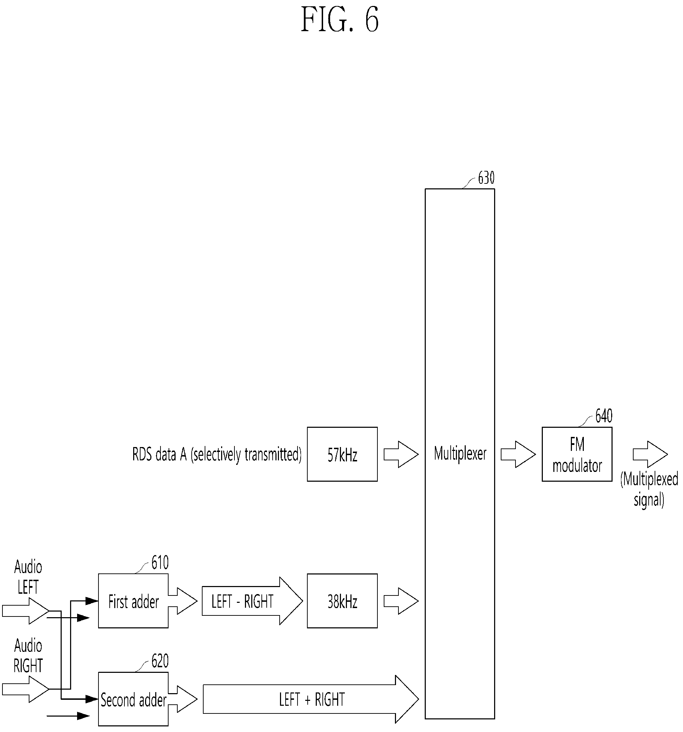

FIG. 6 is a block diagram of a first transmitter according to one embodiment of the present disclosure.

The first transmitter shown in FIG. 6 transmits a typical FM radio broadcast signal using a first adder 610 and a second adder 620.

Then, the multiplexer 630 of the first transmitter multiplexes the FM radio broadcast signal and RDS auxiliary data A and then transmits the multiplexed signal through the FM modulator 640.

However, as described above, when the receiver (not shown) of the first transmitter receives the same RDS auxiliary data from the second transmitter, which is the other transmitter, the first transmitter will no longer transmit the RDS auxiliary data. This design considers communication efficiency, as the receiver does not need to redundantly receive the same data twice.

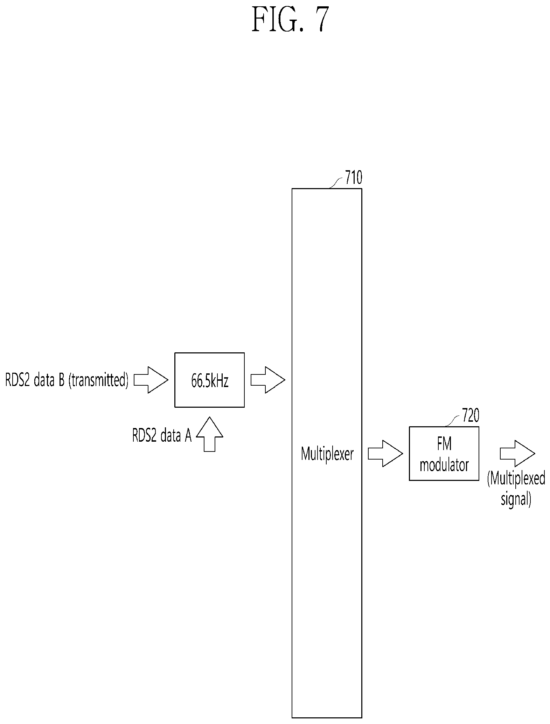

FIG. 7 is a block diagram of a second transmitter according to one embodiment of the present disclosure.

Based on the description of FIG. 6, the second transmitter assumes that it has received RDS auxiliary data A from the first transmitter and further synthesizes RDS auxiliary data A and RDS2 auxiliary data B to transmit the synthesized data at 66.5 kHz.

The multiplexer 710 and FM modulator 720 shown in FIG. 7 are similar to the embodiments described with reference to FIGS. 5 and 6, and thus those skilled in the art can repeat the implementation.

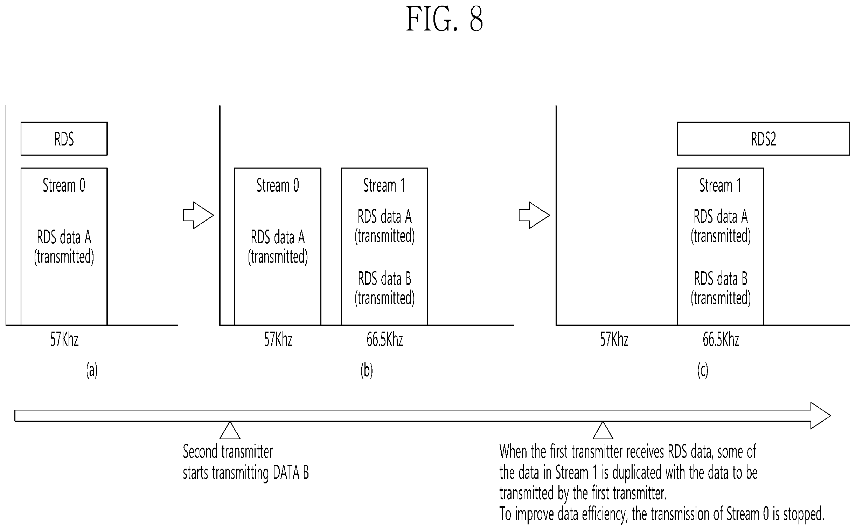

FIG. 8 illustrates the reception status of RDS/RDS2 auxiliary data on a receiver according to one embodiment of the present disclosure, which is based on the description of FIGS. 6 and 7.

When the first transmitter transmits RDS auxiliary data A at 57 kHz, the receiver receives RDS auxiliary data A as shown in FIG. 8-(a).

Having received RDS auxiliary data A from the first transmitter, the second transmitter transmits RDS auxiliary data A and other RDS auxiliary data B at 66.5 kHz.

Therefore, as shown in FIG. 8-(b), the receiver may receive RDS auxiliary data A and RDS auxiliary data B from the second transmitter at 66.5 kHz and receive RDS auxiliary data A from the first transmitter at 57 kHz.

Considering data transmission efficiency, the first transmitter, which has received RDS auxiliary data A from the second transmitter at 66.5 kHz, stops transmitting RDS auxiliary data A at 57 kHz.

Therefore, as shown in FIG. 8-(c), the receiver receives RDS auxiliary data A and RDS auxiliary data B from the second transmitter at 66.5 kHz and does not receive RDS auxiliary data A from the first transmitter at 57 kHz.

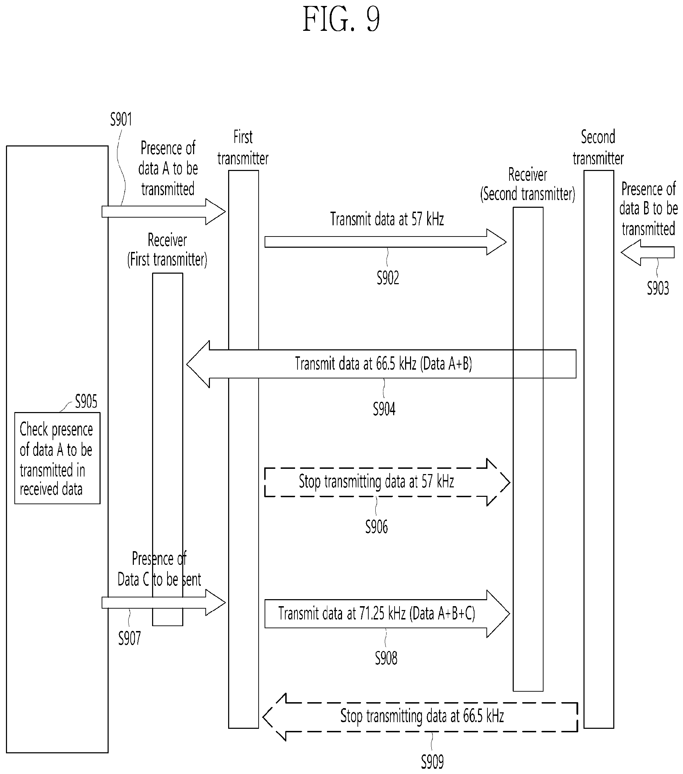

FIG. 9 is a flowchart illustrating the operation process of the first transmitter and the second transmitter according to one embodiment of the present disclosure.

When the first transmitter has RDS auxiliary data A to send (S901), for example, it transmits the data to the receiver of the second transmitter at 57 kHz (S902).

When the second transmitter also has RDS auxiliary data B to send (S903), for example, it is designed to transmit RDS auxiliary data (A+B) to the receiver of the first transmitter at 66.5 kHz (S904).

The first transmitter then checks whether RDS auxiliary data A to be sent is present in the received data (S905).

If the data to be sent is present, the first transmitter stops transmitting RDS auxiliary data A (S906).

Further, when the first transmitter has RDS auxiliary data C to send (S906), for example, it transmits RDS auxiliary data (A+B+C) to the receiver of the second transmitter at 71.25 kHz (S907).

Accordingly, the second transmitter stops transmitting RDS auxiliary data (A+B) (S908), preventing redundant transmission of data.

Based on the previous figures, the embodiments of the present disclosure may be summarized as follows.

First, a control method from the perspective of the first transmitter is configured as follows.

The first transmitter transmits FM radio broadcast to the receiver and transmits auxiliary data of a radio data system to the receiver and another transmitter (second transmitter) at a first frequency.

The first transmitter receives auxiliary data of the radio data system at the second frequency from the other transmitter (second transmitter).

The first transmitter is designed to stop transmitting the auxiliary data of the radio data system at the first frequency when the auxiliary data of the radio data system at the second frequency corresponds to the auxiliary data of the radio data system at the first frequency.

More specifically, the first transmitter compares the auxiliary data of the radio data system at the second frequency with the auxiliary data of the radio data system at the first frequency. Only when the auxiliary data of the radio data system at the second frequency is the same as the auxiliary data of the radio data system at the first frequency as a result of the comparison, the first transmitter stops transmitting the auxiliary data of the radio data system at the first frequency.

The first frequency corresponds to 57 kHz, and the second frequency corresponds to any one of 66.5 kHz, 71.25 kHz, or 76.0 kHz.

The embodiment of the present disclosure from the perspective of the second transmitter is described below.

The second transmitter receives auxiliary data of a radio data system at the first frequency from another transmitter (first transmitter) and generates additional auxiliary data different from the auxiliary data of the radio data system at the first frequency.

Then, the second transmitter transmits the generated auxiliary data and the received auxiliary data of the radio data system to the other transmitter (first transmitter) and a receiver at a second frequency.

Here, the other transmitter (the first transmitter) transmits FM radio broadcast to the receiver. The receiver corresponds to, for example, a vehicle.

The embodiments have been described in terms of a method and/or a device. The description of the method and the description of the device may complement each other.

Although embodiments have been described with reference to each of the accompanying drawings for simplicity, it is possible to design new embodiments by merging the embodiments illustrated in the accompanying drawings. If a recording medium readable by a computer, in which programs for executing the embodiments mentioned in the foregoing description are recorded, is designed by those skilled in the art, it may also fall within the scope of the appended claims. The devices and methods may not be limited by the configurations and methods of the embodiments described above. The embodiments described above may be configured by being selectively combined with one another entirely or in part to enable various modifications. Although preferred embodiments have been described with reference to the drawings, those skilled in the art will appreciate that various modifications and variations may be made in the embodiments within the scope of the appended claims.

Various elements of the devices of the embodiments may be implemented by hardware, software, firmware, or a combination thereof. Various elements in the embodiments may be implemented by a single chip, for example, a single hardware circuit. The components according to the embodiments may be implemented as separate chips, respectively. At least one or more of the components of the device according to the embodiments may include one or more processors capable of executing one or more programs. The one or more programs may perform any one or more of the operations/methods according to the embodiments or include instructions for performing the same. Executable instructions for performing the method/operations of the device according to the embodiments may be stored in a non-transitory CRM or other computer program products configured to be executed by one or more processors, or may be stored in a transitory CRM or other computer program products configured to be executed by one or more processors.

In addition, the memory according to the embodiments may be used as a concept covering not only volatile memories (e.g., RAM) but also nonvolatile memories, flash memories, and PROMs. In addition, it may also be implemented in the form of a carrier wave, such as transmission over the Internet. In addition, the processor-readable recording medium may be distributed to computer systems connected over a network such that the processor-readable code may be stored and executed in a distributed fashion.

In this document, the term "/" and "," should be interpreted as indicating "and/or." For instance, the expression "A/B" may mean "A and/or B." Further, "A, B" may mean "A and/or B." Further, "A/B/C" may mean "at least one of A, B, and/or C." "A, B, C" may also mean "at least one of A, B, and/or C." Further, in the document, the term "or" should be interpreted as "and/or." For instance, the expression "A or B" may mean 1) only A, 2) only B, and/or 3) both A and B. In other words, the term "or" in this document should be interpreted as "additionally or alternatively."

Terms such as first and second may be used to describe various elements of the embodiments. However, various components according to the embodiments should not be limited by the above terms. These terms are only used to distinguish one element from another. For example, a first user input signal may be referred to as a second user input signal. Similarly, the second user input signal may be referred to as a first user input signal. Use of these terms should be construed as not departing from the scope of the various embodiments. The first user input signal and the second user input signal are both user input signals, but do not mean the same user input signal unless context clearly dictates otherwise.

The terminology used to describe the embodiments is used for the purpose of describing particular embodiments only and is not intended to be limiting of the embodiments. As used in the description of the embodiments and in the claims, the singular forms "a", "an", and "the" include plural referents unless the context clearly dictates otherwise. The expression "and/or" is used to include all possible combinations of terms. The terms such as "includes" or "has" are intended to indicate existence of figures, numbers, steps, elements, and/or components and should be understood as not precluding possibility of existence of additional existence of figures, numbers, steps, elements, and/or components. As used herein, conditional expressions such as "if" and "when" are not limited to an optional case and are intended to be interpreted, when a specific condition is satisfied, to perform the related operation or interpret the related definition according to the specific condition.

Operations according to the embodiments described in this specification may be performed by a transmission/reception device including a memory and/or a processor according to embodiments. The memory may store programs for processing/controlling the operations according to the embodiments, and the processor may control various operations described in this specification. The processor may be referred to as a controller or the like. In embodiments, operations may be performed by firmware, software, and/or combinations thereof. The firmware, software, and/or combinations thereof may be stored in the processor or the memory.

The operations according to the above-described embodiments may be performed by the transmission device and/or the reception device according to the embodiments. The transmission/reception device may include a transmitter/receiver configured to transmit and receive media data, a memory configured to store instructions (program code, algorithms, flowcharts and/or data) for the processes according to the embodiments, and a processor configured to control the operations of the transmission/reception device.

The processor may be referred to as a controller or the like, and may correspond to, for example, hardware, software, and/or a combination thereof. The operations according to the above-described embodiments may be performed by the processor.

## Claims

1. A method for controlling a transmitter, the method comprising:
transmitting FM radio broadcast to a receiver; and
transmitting (S902) auxiliary data of a radio data system to the receiver and another transmitter at a first frequency on a transmission frequency;
wherein the first frequency corresponds to 57 kHz;
**characterized in that** the method further includes:
receiving (S904) auxiliary data of the radio data system at a second frequency from the other transmitter on the transmission frequency;
stopping (S906) the transmission of the auxiliary data of the radio data system at the first frequency based on that the auxiliary data of the radio data system at the second frequency corresponds to the auxiliary data of the radio data system at the first frequency,
and
wherein the second frequency corresponds to any one of 66.5 kHz, 71.25 kHz, or 76.0 kHz.

2. The method of claim 1, wherein the stopping includes:
comparing (S905) the auxiliary data of the radio data system at the second frequency with the auxiliary data of the radio data system at the first frequency.

3. The method of claim 2, wherein the stopping is performed only based on that the auxiliary data of the radio data system at the second frequency is the same as the auxiliary data of the radio data system at the first frequency as a result of the comparing.

4. A method for controlling a transmitter, the method comprising:
receiving (S902) auxiliary data of a radio data system at a first frequency from another transmitter on a transmission frequency; and
generating additional auxiliary data different from the auxiliary data of the radio data system at the first frequency;
**characterized in that** the method further includes:
transmitting (S904) a synthesized auxiliary data of the radio data system including the generated auxiliary data and the received auxiliary data of the radio data system to the other transmitter and a receiver at a second frequency on the transmission frequency,
wherein the first frequency corresponds to 57 kHz, and
wherein the second frequency corresponds to any one of 66.5 kHz, 71.25 kHz, or 76.0 kHz.

5. The method of claim 4, wherein the other transmitter transmits FM radio broadcast to the receiver.

6. The method of claim 4 or 5, wherein the receiver corresponds to a vehicle.

7. The method of claim 1,
wherein the auxiliary data of the radio data system transmitted to the receiver and the another transmitter at the first frequency is a first auxiliary data,
wherein the transmitter is a first transmitter and the other transmitter is a second transmitter,
wherein the method further comprises:
based on that the second transmitter has second auxiliary data, transmitting, by the second transmitter, summed data of the first and second auxiliary data as the auxiliary data of the radio data system to a receiver of the first transmitter at the second frequency;
checking, by the first transmitter, whether the auxiliary data sent by the first transmitter is present in the summed data received by the first transmitter; and
based on that the auxiliary data sent by the first transmitter is present in the summed data, stopping, by the first transmitter, the transmitting of the auxiliary data of the first transmitter.

8. The method of claim 7, further including:
based on that the first transmitter has third auxiliary data to send, transmitting, by the first transmitter, summed data of the first, second and third data to the receiver of the second transmitter at a third frequency.

9. The method of claim 8, wherein the first, second and third frequencies are different from each other.

10. The method of claim 8 or 9, wherein the third frequency corresponds to 71.25 kHz.

## Patentansprüche

1. Verfahren zum Steuern eines Senders, wobei das Verfahren umfasst:
Übertragen einer FM-Rundfunksendung an einen Empfänger; und
Übertragen (S902) von Zusatzdaten eines Radiodatensystems an den Empfänger und einen anderen Sender bei einer ersten Frequenz auf einer Übertragungsfrequenz;
wobei die erste Frequenz 57 kHz entspricht;
**dadurch gekennzeichnet, dass** das Verfahren ferner umfasst:
Empfangen (S904) von Zusatzdaten des Radiodatensystems bei einer zweiten Frequenz von dem anderen Sender auf der Übertragungsfrequenz;
Stoppen (S906) der Übertragung der Zusatzdaten des Radiodatensystems bei der ersten Frequenz darauf basierend, dass die Zusatzdaten des Radiodatensystems bei der zweiten Frequenz den Zusatzdaten des Radiodatensystems bei der ersten Frequenz entsprechen, und
wobei die zweite Frequenz einer beliebigen der Frequenzen 66,5 kHz, 71,25 kHz oder 76,0 kHz entspricht.

2. Verfahren nach Anspruch 1, wobei das Stoppen umfasst:
Vergleichen (S905) der Zusatzdaten des Radiodatensystems bei der zweiten Frequenz mit den Zusatzdaten des Radiodatensystems bei der ersten Frequenz.

3. Verfahren nach Anspruch 2, wobei das Stoppen ausschließlich darauf basierend durchgeführt wird, dass als Ergebnis des Vergleichens die Zusatzdaten des Radiodatensystems bei der zweiten Frequenz mit den Zusatzdaten des Radiodatensystems bei der ersten Frequenz übereinstimmen.

4. Verfahren zum Steuern eines Senders, wobei das Verfahren umfasst:
Empfangen (S902) von Zusatzdaten eines Radiodatensystems bei einer ersten Frequenz von einem anderen Sender auf einer Übertragungsfrequenz; und
Erzeugen zusätzlicher Zusatzdaten, die sich von den Zusatzdaten des Radiodatensystems bei der ersten Frequenz unterscheiden;
**dadurch gekennzeichnet, dass** das Verfahren ferner umfasst:
Übertragen (S904) synthetisierter Zusatzdaten des Radiodatensystems, die die erzeugten Zusatzdaten und die empfangenen Zusatzdaten des Radiodatensystems umfassen, an den anderen Sender und einen Empfänger bei einer zweiten Frequenz auf der Übertragungsfrequenz,
wobei die erste Frequenz 57 kHz entspricht, und
wobei die zweite Frequenz einer beliebigen der Frequenzen 66,5 kHz, 71,25 kHz oder 76,0 kHz entspricht.

5. Verfahren nach Anspruch 4, wobei der andere Sender eine FM-Rundfunksendung an den Empfänger überträgt.

6. Verfahren nach Anspruch 4 oder 5, wobei der Empfänger einem Fahrzeug entspricht.

7. Verfahren nach Anspruch 1,
wobei die an den Empfänger und den anderen Sender bei der ersten Frequenz übertragenen Zusatzdaten des Radiodatensystems erste Zusatzdaten sind,
wobei der Sender ein erster Sender ist und der andere Sender ein zweiter Sender ist,
wobei das Verfahren ferner umfasst:
darauf basierend, dass der zweite Sender zweite Zusatzdaten aufweist, Übertragen summierter Daten aus den ersten und zweiten Zusatzdaten als Zusatzdaten des Radiodatensystems an einen Empfänger des ersten Senders bei der zweiten Frequenz durch den zweiten Sender;
Prüfen durch den ersten Sender, ob die von dem ersten Sender gesendeten Zusatzdaten in den von dem ersten Sender empfangenen summierten Daten vorhanden sind; und
darauf basierend, dass die von dem ersten Sender gesendeten Zusatzdaten in den summierten Daten vorhanden sind, Stoppen der Übertragung der Zusatzdaten des ersten Senders durch den ersten Sender.

8. Verfahren nach Anspruch 7, ferner umfassend:
darauf basierend, dass der erste Sender zu übertragende dritte Zusatzdaten aufweist, Übertragen summierter Daten aus den ersten, zweiten und dritten Daten an den Empfänger des zweiten Senders bei einer dritten Frequenz durch den ersten Sender.

9. Verfahren nach Anspruch 8, wobei sich die erste, die zweite und die dritte Frequenz voneinander unterscheiden.

10. Verfahren nach Anspruch 8 oder 9, wobei die dritte Frequenz 71,25 kHz entspricht.

## Revendications

1. Procédé de commande d'un émetteur, le procédé comprenant:
la transmission d'une radiodiffusion FM à un récepteur; et
la transmission (S902) de données auxiliaires d'un système de données radio au récepteur et à un autre émetteur à une première fréquence sur une fréquence de transmission;
dans lequel la première fréquence correspond à 57 kHz;
**caractérisé en ce que** le procédé comprend en outre:
la réception (S904) de données auxiliaires du système de données radio à une deuxième fréquence provenant de l'autre émetteur sur la fréquence de transmission;
l'interruption (S906) de la transmission des données auxiliaires du système de données radio à la première fréquence, étant donné que les données auxiliaires du système de données radio à la deuxième fréquence correspondent aux données auxiliaires du système de données radio à la première fréquence,
et
dans lequel la deuxième fréquence correspond à une valeur parmi 66,5 kHz, 71,25 kHz ou 76,0 kHz.

2. Procédé selon la revendication 1, dans lequel l'arrêt comprend:
la comparaison (S905) des données auxiliaires du système de données radio à la deuxième fréquence avec les données auxiliaires du système de données radio à la première fréquence.

3. Procédé selon la revendication 2, dans lequel l'arrêt est effectué uniquement lorsque les données auxiliaires du système de données radio à la deuxième fréquence sont identiques aux données auxiliaires du système de données radio à la première fréquence, comme le montre la comparaison.

4. Procédé de commande d'un émetteur, le procédé comprenant:
la réception (S902) de données auxiliaires du système de données radio à une première fréquence provenant d'un autre émetteur sur la fréquence de transmission; et
la génération de données auxiliaires supplémentaires différentes des données auxiliaires du système de données radio à la première fréquence;
**caractérisé en ce que** le procédé comprend en outre:
la transmission (S904) de données auxiliaires synthétisées du système de données radio, y compris les données auxiliaires générées et les données auxiliaires reçues du système de données radio, à l'autre émetteur et à un récepteur à une deuxième fréquence sur la fréquence de transmission,
dans lequel la première fréquence correspond à 57 kHz, et
dans lequel la deuxième fréquence correspond à une valeur parmi 66,5 kHz, 71,25 kHz ou 76,0 kHz.

5. Procédé selon la revendication 4, dans lequel l'autre émetteur une radiodiffusion FM au récepteur.

6. Procédé selon la revendication 4 ou 5, dans lequel le récepteur correspond à un véhicule.

7. Procédé selon la revendication 1,
dans lequel les données auxiliaires du système de données radio transmises au récepteur et à l'autre émetteur à la première fréquence sont des premières données auxiliaires,
dans lequel l'émetteur est un premier émetteur et l'autre émetteur est un deuxième émetteur,
dans lequel le procédé comprend en outre:
étant donné que le deuxième émetteur dispose de deuxièmes données auxiliaires, la transmission, par le deuxième émetteur, des données sommées des premières et des deuxièmes données auxiliaires en tant que données auxiliaires du système de données radio à un récepteur du premier émetteur à la deuxième fréquence;
la vérification, par le premier émetteur, visant à savoir si les données auxiliaires envoyées par le premier émetteur figurent dans les données sommées reçues par le premier émetteur; et
sur la base des données auxiliaires envoyées par le premier émetteur présentes dans les données sommées, l'arrêt, par le premier émetteur, de la transmission des données auxiliaires du premier émetteur.

8. Procédé selon la revendication 7, comprenant en outre:
étant donné que le premier émetteur dispose de troisièmes données auxiliaires à transmettre, la transmission, par le premier émetteur, des données sommées des premières, deuxièmes et troisièmes données au récepteur du deuxième émetteur à une troisième fréquence.

9. Procédé selon la revendication 8, dans lequel les première, deuxième et troisièmes fréquences sont différentes des unes des autres.

10. Procédé selon la revendication 8 ou 9, dans lequel la troisième fréquence correspond à 71,25 kHz.
